# EUROPEAN PATENT APPLICATION

(11) **EP 4 765 264 A1**
(43) Date of publication of application: **24.06.2026**
(21) Application number: 24907946.8
(22) Date of filing: 10.12.2024
(51) Int. Cl.: H01M 10/04, H01M 50/342, H01M 10/0585

(54) **ELECTRODE ASSEMBLY, SECONDARY BATTERY INCLUDING SAME, AND METHOD FOR MANUFACTURING SAME**

(30) Priority: 21.12.2023 KR 20230188301
(71) Applicant: LG Energy Solution, Ltd., Seoul 07335 (KR)
(72) Inventor: HA, Jung Hoon, Daejeon 34122 (KR)
(74) Representative: Plasseraud IP
(86) International application number: PCT/KR2024/020160
(87) International publication number: WO 2025/135662

(57) **Abstract**

The present disclosure relates to an electrode assembly, and an electrode assembly according to one aspect of the present disclosure may include a stacked portion having electrodes and separators alternately interposed, and having a first side and a second side perpendicular to the first side; an electrode tab connected to the electrode and protruding outward from the first side of the stacked portion through each section between the separators; an opening provided on the second side of the stacked portion to allow gas between the separators to flow to the outside; and a fixing member that fixes the electrode and the separator and covers at least a portion of the opening.

## Description

### TECHNICAL FIELD

### CROSS-REFERENCE TO RELATED APPLICATIONS

The present application claims priority to Korean Patent Application No. 10-2023-0188301 filed on December 21, 2023 in the Republic of Korea, the disclosures of which are incorporated herein by reference.

### TECHNICAL FIELD

The present disclosure relates to an electrode assembly, a secondary battery including the same, and a manufacturing method thereof, and more specifically, to an electrode assembly in which electrodes and separators are alternately interposed, a secondary battery including the same, and a manufacturing method thereof.

### BACKGROUND ART

In general, types of secondary batteries include nickel cadmium batteries, nickel hydrogen batteries, lithium-ion batteries, and lithium-ion polymer batteries. These secondary batteries are applied and used not only in small products such as digital cameras, P-DVDs, MP3Ps, mobile phones, PDAs, portable game devices, power tools, and E-bikes, but also in large products requiring high power such as electric vehicles or hybrid vehicles, in power storage devices that store surplus generated power or renewable energy, and in power storage devices for backup.

To manufacture such a secondary battery, an electrode active material slurry is first applied to an electrode current collector to manufacture an electrode, which is then stacked on both sides of a separator to form an electrode assembly having a predetermined shape. And, the electrode assembly is accommodated in a battery case, an electrolyte solution is injected, and then the battery case is sealed. At this time, the battery case may be a pouch.

Meanwhile, the electrode assembly is classified into various types. For example, there are the Simple Stack Type in which simply a positive electrode, a separator, and a negative electrode continue to be alternately stacked, the Lamination & Stack Type (L&S) in which electrode cells are first manufactured using unit electrodes and separators and then stacked, the Stack & Folding Type (S&F) in which a plurality of unit electrodes or electrode cells are spaced apart and attached to one surface of a separator sheet that is long on one side and the separator sheet is repeatedly folded in the same direction from one end, and the Z-Folding Type in which each of a plurality of electrodes or electrode cells is alternately attached to one surface and the other surface of a separator sheet that is long on one side and the separator sheet is folded in a specific direction from one end and then folded in the opposite direction alternately and repeatedly.

However, the electrode assembly manufactured by the folding method has a problem that the part where the separator sheet is folded is blocked and thus it is difficult for the gas between the separators to be discharged smoothly through the folded part. On the other hand, in the electrode assembly manufactured by the stack method, the separator sheet is cut into unit lengths, so there is no part blocked in the perimeter direction. Therefore, the electrode assembly manufactured by the stack method may discharge the gas between the separators relatively smoothly. However, since the separator sheet is cut, there is a problem that the positions of the electrodes and separators stacked on each other are not relatively fixed compared to the folding method.

Accordingly, there has been an urgent need to develop an electrode assembly in which the alternately stacked electrodes and separators may be stably fixed while the gas between the separators may be discharged smoothly in various directions, a secondary battery including the same, and a manufacturing method thereof.

### SUMMARY

### TECHNICAL PROBLEM

The present disclosure is designed to solve the problems of the related art, and therefore the present disclosure is directed to providing an electrode assembly having a stable structure while allowing the gas between separators to be smoothly discharged to the outside, a secondary battery including the same, and a manufacturing method thereof.

Technical problems to be solved by the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is provided an electrode assembly including a stacked portion having electrodes and separators alternately interposed, and having a first side and a second side perpendicular to the first side; an electrode tab connected to the electrode and protruding outward from the first side of the stacked portion through each section between the separators; an opening provided on the second side of the stacked portion to allow gas between the separators to flow to the outside; and a fixing member that fixes the electrode and the separator and covers at least a portion of the opening.

At this time, the fixing member may include a first fixing portion attached to one surface of the stacked portion; a second fixing portion attached to the other surface of the stacked portion; and a connection portion connecting the first fixing portion and the second fixing portion, and covering at least a portion of the opening.

At this time, the opening may extend in the longitudinal direction of the stacked portion, and the fixing member may be provided along the longitudinal direction of the stacked portion.

At this time, the connection portion may be made of a porous material to allow gas between the separators to pass through.

At this time, in the connection portion, a communication hole communicating with the opening may be formed.

At this time, the communication hole may be provided in plurality.

At this time, the fixing member may have a ring shape surrounding a perimeter of the stacked portion.

At this time, the fixing member may be configured in plurality and disposed along a direction parallel to the second side of the stacked portion.

At this time, the plurality of fixing members may include a first fixing member and a second fixing member adjacent to each of both ends in a direction parallel to the second side of the stacked portion.

At this time, the opening may be formed by cutting the separator from one end to the other end in a direction parallel to the second side.

At this time, the openings may be provided on both opposite sides of the stacked portion, respectively.

At this time, the fixing member may be made of a tape.

According to another aspect of the present disclosure, there is provided a secondary battery including a pouch having a receiving space therein; and an electrode assembly disposed in the receiving space, wherein the electrode assembly includes a stacked portion having electrodes and separators alternately interposed, and having a first side and a second side perpendicular to the first side; an electrode tab connected to the electrode and protruding outward from the first side of the stacked portion through each section between the separators; an opening provided on the second side of the stacked portion to allow gas between the separators to flow to the outside; and a fixing member that fixes the electrode and the separator and covers at least a portion of the opening.

According to still another aspect of the present disclosure, there is provided a manufacturing method of a secondary battery including a step of manufacturing an electrode assembly; a step of accommodating the electrode assembly in a receiving space of a pouch; a step of discharging gas in the receiving space to one side of the pouch; and a step of sealing the pouch, wherein the step of manufacturing the electrode assembly includes a step of forming a stack including a stacked portion having electrodes and separators alternately interposed and having a first side and a second side perpendicular to the first side, an electrode tab connected to the electrode and protruding outward from the first side of the stacked portion, and an opening provided on the second side of the stacked portion to allow gas between the separators to flow to the outside; and a step of attaching a fixing member covering at least a portion of the opening to the stack in order to fix the electrode and the separator.

At this time, in the step of accommodating the electrode assembly in the receiving space, the opening of the electrode assembly may be disposed to face the one side of the pouch.

At this time, the step of forming the stack may include a step of folding a separator sheet along a direction parallel to the second side so that electrodes and separators are alternately interposed; and a step of forming the opening in the folded part of the separator sheet along the second side.

At this time, in the step of folding the separator sheet, several parts of the separator sheet may overlap each other in a lateral direction of the electrode to form the folded part, and in the step of forming the opening, the folded part may be penetrated in the overlapping direction.

At this time, in the step of forming the opening, the folded part of the separator sheet may be cut or a communication hole may be formed in the folded part of the separator sheet.

At this time, in the step of forming the opening, the folded part of the separator sheet may be cut from one end to the other end in a direction parallel to the second side.

### ADVANTAGEOUS EFFECTS

According to one aspect of the present disclosure, an electrode tab is provided on a first side of a stacked portion in which electrodes and separators are alternately interposed, and an opening through which gas may flow is provided on a second side perpendicular to the first side, and a fixing member is configured to fix a relative position between the electrode and the separator.

Through this, the gas between the separators may be smoothly discharged to the outside through the opening, while the structural stability of the electrode assembly may be increased by the fixing member.

According to one aspect of the present disclosure, a communication hole is formed in a part of the fixing member covering the opening, or the one part is made of a porous material, so that the obstruction of gas flow by the fixing member may be minimized, and thus gas between the separators may be more smoothly discharged to the outside through the opening.

According to one aspect of the present disclosure, since the electrode assembly is disposed in the receiving space of the pouch so that the opening faces the opening formed in the gas capture unit of the pouch, the gas in the receiving space and the electrode assembly may be more effectively discharged to the outside of the pouch.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a perspective view of an electrode assembly according to the first embodiment of the present disclosure as viewed from above.
FIG. 2 is a vertical cross-sectional view of an electrode assembly according to the first embodiment of the present disclosure.
FIG. 3 is an enlarged view of a part of FIG. 2.
FIG. 4 is a perspective view of an electrode assembly according to the second embodiment of the present disclosure as viewed from above.
FIG. 5 is a perspective view of an electrode assembly according to the third embodiment of the present disclosure as viewed from above.
FIG. 6 is a perspective view of an electrode assembly according to the fourth embodiment of the present disclosure as viewed from above.
FIG. 7 is a perspective view of an electrode assembly according to the fifth embodiment of the present disclosure as viewed from above.
FIG. 8 is a vertical cross-sectional view of an electrode assembly according to the fifth embodiment of the present disclosure.
FIG. 9 is a perspective view of an electrode assembly according to the sixth embodiment of the present disclosure as viewed from above.
FIG. 10 is perspective view of a secondary battery according to an embodiment of the present disclosure as viewed from above. At this time, the electrode assembly accommodated inside the pouch is indicated by a dotted line.
FIG. 11 is a flow chart of a manufacturing method of a secondary battery according to an embodiment of the present disclosure.
FIG. 12 is a flow chart that subdivides step S110 of FIG. 11.
FIGS. 13 and 14 are views for describing steps S200 and S300 according to an embodiment of the present disclosure.

### DETAILED DESCRIPTION

Preferred embodiments of the present disclosure will be described in detail to enable those having ordinary skill in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, an electrode assembly according to the first embodiment of the present disclosure will be described.

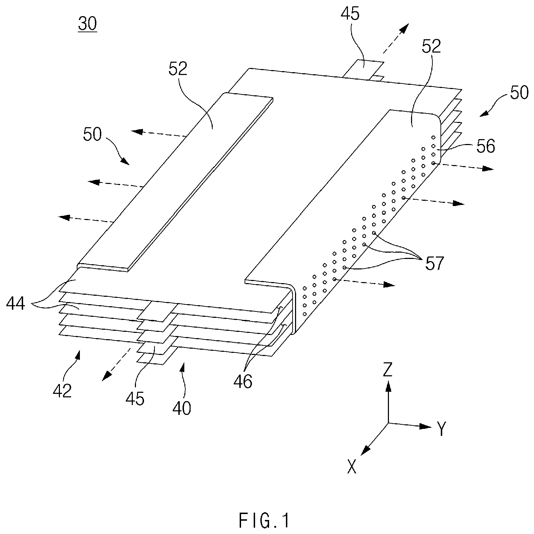

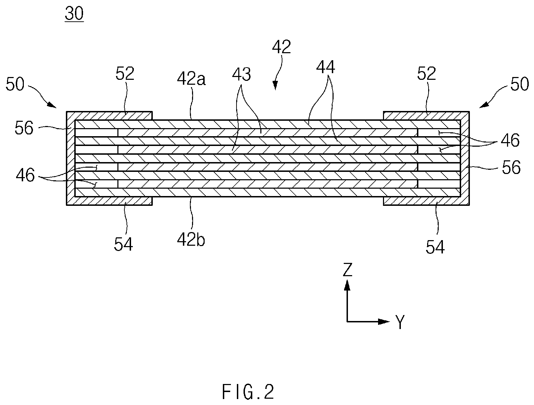

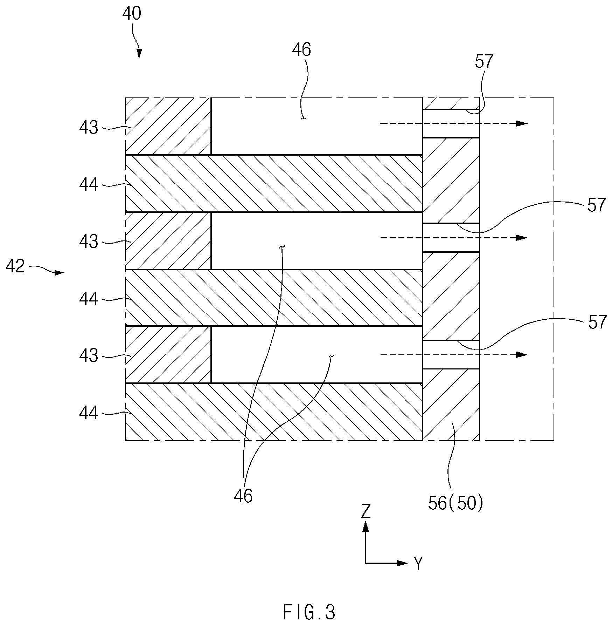

FIG. 1 is a perspective view of an electrode assembly according to the first embodiment of the present disclosure as viewed from above. FIG. 2 is a vertical cross-sectional view of an electrode assembly according to the first embodiment of the present disclosure. FIG. 3 is an enlarged view of a part of FIG. 2.

In FIGS. 1 to 3, an electrode assembly 30 according to the first embodiment of the present disclosure is disclosed. Referring to FIGS. 1 to 3, the electrode assembly 30 according to the first embodiment of the present disclosure may be an assembly capable of charging and discharging electric energy. In this embodiment, the electrode assembly 30 may include a stack 40.

In this embodiment, the stack 40 may include a stacked portion 42 in which electrodes 43 and separators 44 are alternately interposed. As an example, the stacked portion 42 may be manufactured by stack method in which the electrodes 43 and separators 44 are stacked sequentially.

In the embodiment shown, the stack 40 is configured such that five separators 44 are stacked in the vertical direction (Z-axis direction) and four electrodes 43 are interposed one by one between each of the separators 44. However, the number of separators 44 and electrodes 43 may be changed as necessary.

In this embodiment, the electrode 43 may be a square-shaped plate, sheet, or film in which an electrode active material is applied to a metal thin film. However, the shape of the electrode 43 may be appropriately modified as necessary.

At this time, in this embodiment, the metal thin plate may be a plate made of aluminum (Al) or copper (Cu), and the electrode active material may be lithium-cobalt oxide (LCO), lithium-manganese oxide (LMO), nickel-cobalt-manganese (NCM), nickel-cobalt-aluminum (NCA), lithium-iron phosphate (LFP), graphite (C), silicon (Si), or the like, but the type of the metal thin plate and the type of the electrode active material are not limited to those described above.

In this embodiment, the separator 44 may perform the function of ensuring the stability of the electrode assembly 30 by preventing the stacked electrodes 43 from touching each other. This separator 44 may be made of polyethylene, polypropylene, or the like, but the type of material forming the separator 44 is not limited to those described above.

Referring to FIGS. 1 and 2 again, the stack 40 of the electrode assembly 30 according to the first embodiment of the present disclosure may include an electrode tab 45. The electrode tab 45 may be a tab for electrically connecting the electrode 43 to an external power source or load.

To this end, the electrode tab 45 may have the shape of a plate, film, or sheet extending outward from the edge of the electrode 43. The electrode tab 45 may be made of the same material as the metal thin plate forming the electrode 43.

At this time, in this embodiment, the electrode tab 45 may protrude outward from the first side of the stacked portion 42 through each section between the separators 44. The first side of the stacked portion 42 may mean a side provided at the front (positive direction of the X-axis) and the rear (negative direction of the X-axis) of the stacked portion 42, respectively. The first side of the stacked portion 42 may extend in the left-right direction (Y-axis direction).

As shown, in this embodiment, the gas between the separators 44 may be discharged forward (in the positive direction of the X-axis) and backward (in the negative direction of the X-axis) through the first side of the stacked portion 42.

This may be because the edge portions of the separator 44 are not attached to each other at the first side of the stacked portion 42 and thus gas may flow. This may be because the electrode tab 45 connected to the electrode 43 protrudes outward from the first side through each section between the separators 44.

Referring to FIGS. 1 to 3, the stack 40 of the electrode assembly 30 according to the first embodiment of the present disclosure may include an opening 46. The opening 46 may mean a part that is open to allow the gas between the separators 44 to flow and be discharged. That is, the opening 46 may be formed as the edges of the separators 44 are spaced apart so as not to be attached to each other.

In this embodiment, the opening 46 may be provided on the second side of the stacked portion 42. At this time, the second side of the stacked portion 42 may mean a side perpendicular to the first side described above. More specifically, the second side of the stacked portion 42 may mean a side provided on both sides of the stacked portion 42 in the left-right direction (Y-axis direction), respectively.

At this time, in this embodiment, the second side of the stacked portion 42 may extend in the front-back direction (X-axis direction). And, the opening 46 may be provided along the direction in which the second side extends (X-axis direction) from the side of the stacked portion 42. In the present disclosure, the longitudinal direction of the stacked portion 42 may mean the direction in which the second side extends (X-axis direction).

Accordingly, in this embodiment, the gas between the separators 44 may be entirely discharged in the left-right direction (Y-axis direction) from the second side of the stacked portion 42 through the opening 46.

Meanwhile, as described above, in this embodiment, the separators 44 are not connected or attached to each other at the first side and the second side of the stacked portion 42, so that the relative positions of the electrodes 43 and the separators 44 stacked on each other may not be stably fixed. In other words, the overall structural stability of the stack 40 may be lowered by the opening 46.

To solve this, the electrode assembly 30 according to the first embodiment of the present disclosure may include a fixing member 50. The fixing member 50 may be a member for stably fixing the relative position between the electrode 43 and the separator 44 of the stack 40.

As an example, the fixing member 50 may be formed of a film or sheet-like tape having an adhesive material applied to one surface thereof, but the fixing member 50 is not particularly limited as long as it may fix the positions of the electrode 43 and the separator 44.

Referring to FIGS. 1 and 2, in this embodiment, the fixing member 50 may include a first fixing portion 52. In this embodiment, the first fixing portion 52 may be a portion for supporting and fixing the upper side (positive direction of the Z-axis) of the stack 40.

At this time, in this embodiment, the first fixing portion 52 may be attached to the upper surface of the stacked portion 42. And, the first fixing portion 52 may be provided along the edge portion adjacent to the second side on the upper surface of the stacked portion 42. In other words, the first fixing portion 52 may be provided along the longitudinal direction (X-axis direction) of the stacked portion 42. This may be to more stably support and fix the second side where the opening 46 is formed in the stacked portion 42.

Meanwhile, in this embodiment, the fixing member 50 may include the second fixing portion 54. In this embodiment, the second fixing portion 54 may be a portion for supporting and fixing the lower side (negative direction of the Z-axis) of the stack 40.

At this time, in this embodiment, the second fixing portion 54 may be attached to the lower surface of the stacked portion 42. And, the second fixing portion 54 may be provided along the edge portion adjacent to the second side on the lower surface of the stacked portion 42. In other words, the second fixing portion 54 may be provided along the longitudinal direction (X-axis direction) of the stacked portion 42. This may be to more stably support and fix the second side in which the opening 46 is formed in the stacked portion 42.

Meanwhile, referring to FIGS. 1 to 3, in this embodiment, the fixing member 50 may include a connection portion 56. The connection portion 56 may be a portion that connects the first fixing portion 52 and the second fixing portion 54 described above.

By such a connection portion 56, the supporting force and fixing force by the first fixing portion 52 and the supporting force and fixing force by the second fixing portion 54 may be applied together to the stack 40. Through this, the fixing member 50 may increase the structural stability of the stack 40.

At this time, in this embodiment, the connection portion 56 may extend in a direction parallel to the second side (X-axis direction) parallel to the first fixing portion 52 and the second fixing portion 54. As a result, the second side of the stacked portion 42 may be entirely fixed and supported by the fixing member 50.

Meanwhile, in this embodiment, the connection portion 56 may cover at least a part or an area of the opening 46. This may be because the first fixing portion 52 and the second fixing portion 54 are disposed to be spaced apart in the vertical direction (Z-axis direction) with the opening 46 in between.

As such, if the connection portion 56 covers the opening 46, the flow of gas flowing through the opening 46 may be impeded. This may hinder the discharge of gas between the separators 44.

To solve this, a communication hole 57 may be formed in the connection portion 56 of the electrode assembly 30 according to the first embodiment of the present disclosure. The communication hole 57 may be a hole for allowing the opening 46 to communicate with the outside.

As shown in FIGS. 1 and 3, the communication hole 57 may be configured to penetrate the connection portion 56. Accordingly, the gas between the separators 44 may be smoothly discharged to the outside through the opening 46 and the communication hole 57, while the structural stability of the stack 40 may be ensured.

At this time, in this embodiment, the communication hole 57 may be configured in plurality. And, the plurality of communication holes 57 may be evenly distributed in the connection portion 56. This may be to allow gas to flow more smoothly through the opening 46.

As described above, the electrode assembly 30 according to the first embodiment of the present disclosure is provided with an opening 46 on the second side of the stacked portion 42, so that gas between the separators 44 may be smoothly discharged to the outside through the second side.

Additionally, in the electrode assembly 30 according to the first embodiment of the present disclosure, the fixing member 50 is attached to the stack 40 to fix the electrode 43 and the separator 44, thereby increasing the overall structural stability of this electrode assembly 30.

Furthermore, in the electrode assembly 30 according to the first embodiment of the present disclosure, a communication hole 57 is provided in the connection portion 56 of the fixing member 50, so that the obstruction of gas discharge by the fixing member 50 may be minimized.

Meanwhile, referring to FIG. 1 again, in this embodiment, the fixing members 50 are configured as a pair, and thus may be provided on both sides of the stacked portion 42 in the left-right direction (Y-axis direction), respectively. Accordingly, the electrode 43 and the separator 44 of the stack 40 may be supported and fixed in a more balanced manner. Of course, the fixing member 50 may be configured in only one, if necessary.

Hereinafter, an electrode assembly according to the second embodiment of the present disclosure will be described with different drawings.

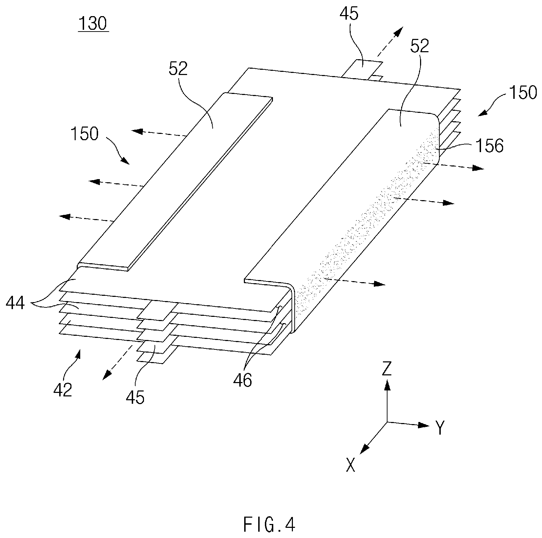

FIG. 4 is a perspective view of an electrode assembly according to the second embodiment of the present disclosure as viewed from above.

FIG. 4 discloses an electrode assembly 130 according to the second embodiment of the present disclosure. According to the electrode assembly 130 according to the second embodiment of the present disclosure, the connection portion 156 of the fixing member 150 may be made of a porous material.

For example, the connection portion 156 may be made of a material such as polyethylene terephthalate (PET), polyethylene (PE), polypropylene (PP), casting polypropylene (CPP), or the like. However, the material of the connection portion 156 is not particularly limited as long as it allows gas to pass between the separators 44.

Through this, in the electrode assembly 130 according to the second embodiment of the present disclosure, the gas between the separators 44 may pass through the connection portion 156 of the fixing member 150 and flow outward, so that the obstruction of the gas flow by the fixing member 150 may be minimized.

Therefore, the electrode assembly 130 according to the second embodiment of the present disclosure may ensure the structural stability of the stack 40 while allowing gas to be discharged smoothly through the opening 46.

Meanwhile, in this embodiment, the connection portion 156, the first fixing portion 52, and the second fixing portion of the fixing member 150 are configured to be made of different materials. However, it may be possible for the first fixing portion 52 and the second fixing portion of the fixing member 150 to be made of the same material as the connection portion 156.

Hereinafter, an electrode assembly according to the third embodiment of the present disclosure will be described with different drawings.

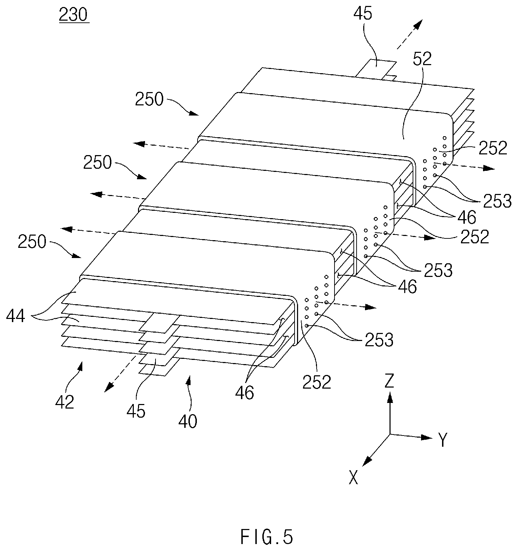

FIG. 5 is a perspective view of an electrode assembly according to the third embodiment of the present disclosure as viewed from above.

FIG. 5 discloses an electrode assembly 230 according to the third embodiment of the present disclosure. The fixing member 250 of the electrode assembly 230 according to the third embodiment of the present disclosure may have a ring or band shape surrounding the perimeter of the stacked portion 42. At this time, the perimeter of the stacked portion 42 may be a part surrounding the upper surface, lower surface, and second side of the stacked portion 42.

As such, in this embodiment, the fixing member 250 is configured to surround the stacked portion 42 entirely, so that the fixing force and supporting force by the fixing member 250 may be more strongly applied to the stack 40.

Meanwhile, in this embodiment, when viewed in a direction parallel to the second side (X-axis direction), the length of the fixing member 250 may be shorter than the length of the second side of the stacked portion 42. This may be to minimize the part of the opening 46 covered by the fixing member 250.

At this time, in this embodiment, the fixing member 250 may be configured in plurality to supplement the fixing force and supporting force. And, the plurality of fixing members 250 may be disposed in a direction parallel to the second side (X-axis direction).

Accordingly, the force for supporting or fixing the stack 40 may be strongly applied by the multiple fixing members 250. Additionally, since the opening 46 positioned between the fixing members 250 is not blocked by the fixing members 250, gas may be discharged smoothly through the opening 46.

Hereinafter, the fixing member 250 positioned at the frontmost (positive direction of the X-axis) among the plurality of fixing members 250 is referred to as a first fixing member, and the fixing member 250 positioned at the rearmost (negative direction of the X-axis) is referred to as a second fixing member.

At this time, in this embodiment, the first fixing member and the second fixing member may be positioned adjacent to each of both ends of the stacked portion 42 in a direction parallel to the second side (X-axis direction). This may be to allow the supporting force and fixing force of the fixing member 250 to be applied more effectively to the stack 40.

Here, the fact that the fixing member 250 is positioned adjacent to the ends of the stacked portion 42 may mean that the fixing member 250 is positioned closer to the ends than the central part of the stacked portion 42.

Meanwhile, in this embodiment, a communication hole 253 may be formed in the part 252 covering the opening 46 in the fixing member 250. At this time, the communication hole 253 may be configured in the same manner as the communication hole 57 (shown in FIG. 1) described in the first embodiment. Through this, the obstruction of the gas flow by the fixing member 250 may be minimized.

Hereinafter, an electrode assembly according to the fourth embodiment of the present disclosure will be described with different drawings.

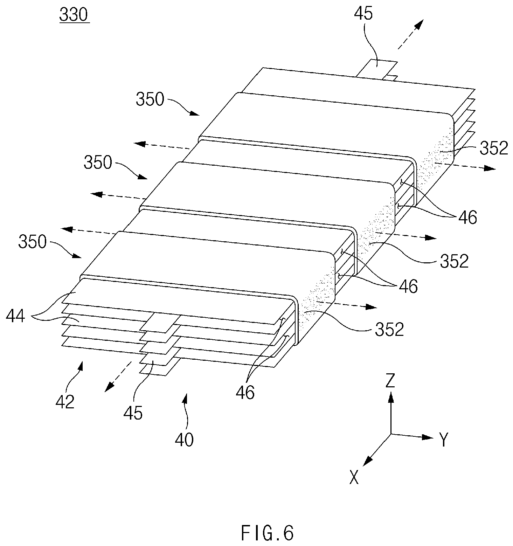

FIG. 6 is a perspective view of an electrode assembly according to the fourth embodiment of the present disclosure as viewed from above.

FIG. 6 discloses an electrode assembly 330 according to the fourth embodiment of the present disclosure. Referring to FIG. 6, according to the electrode assembly 330 according to the fourth embodiment of the present disclosure, a part 352 covering an opening 46 in a fixing member 350 may be made of a porous material. At this time, the porous material may be the same as the porous material described in the second embodiment.

Through this, in the electrode assembly 330 according to the fourth embodiment of the present disclosure, gas between the separators 44 may pass through the fixing member 350 and flow outward, so that the obstruction of the gas flow by the fixing member 350 may be minimized.

Therefore, the electrode assembly 330 according to the fourth embodiment of the present disclosure may ensure the structural stability of the stack 40 while allowing gas to be discharged smoothly through the opening 46.

Meanwhile, in this embodiment, the fixing member 350 is configured such that the part 352 covering the opening 46 and the remaining part are made of different materials. However, it may be possible for the fixing member 350 to be made of the same material as a whole.

Hereinafter, an electrode assembly according to the fifth embodiment of the present disclosure will be described with different drawings.

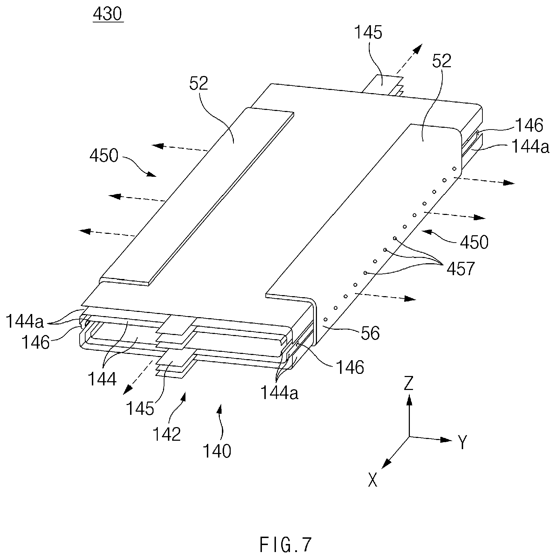

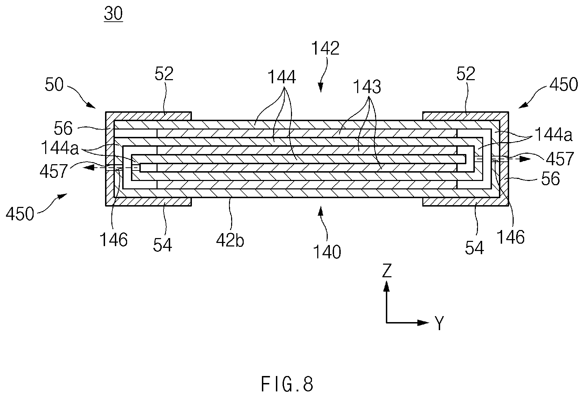

FIG. 7 is a perspective view of an electrode assembly according to the fifth embodiment of the present disclosure as viewed from above. FIG. 8 is a vertical cross-sectional view of an electrode assembly according to the fifth embodiment of the present disclosure.

FIGS. 7 and 8 disclose an electrode assembly 430 according to the fifth embodiment of the present disclosure. Referring to FIGS. 7 and 8, a stack 140 of the electrode assembly 430 according to the fifth embodiment of the present disclosure may be formed by folding a single separator sheet several times in a direction parallel to the second side (X-axis direction).

In other words, the stack 140 of this electrode assembly 430 may be formed by folding a separator sheet extending long in a direction parallel to the first side (Y-axis direction) along a direction parallel to the second side (Y-axis) direction) for each predetermined unit length. At this time, the unit length may correspond to or be longer than the width of the electrode 43. That is, the stack 140 of this electrode assembly 430 may be manufactured by a folding method.

As a result, several parts of the separator sheet may be folded (or bent) on the second side of the stacked portion 142 to form an overlapping part. Hereinafter, the part is referred to as a folded part 144a. As shown in FIG. 8, several separators may be overlapped on the folded part 144a.

As such, when the stack 140 is manufactured by a folding method, the folded part 144a is formed on the second side of the stacked portion 142, and thus it may be difficult for gas between the separators 144 to be discharged to the outside through the second side. This is because several separators are overlapped on the folded part 144a.

To solve this, in this embodiment, an opening 146 may be formed on the folded part 144a. The opening 146 may be formed by penetrating the folded part 144a in a direction in which the separator sheet overlaps (Y-axis direction). Through this, the gas between the separators 144 positioned at the innermost side may be directly discharged to the outside through the opening 146.

Meanwhile, in this embodiment, the opening 146 may be formed by cutting the folded part 144a in a direction parallel to the second side (X-axis direction). At this time, the opening 146 may be formed by cutting the folded part 144a from one end to the other end in the above direction (X-axis direction).

Through this, the gas between the separators 144 may be discharged through the second side entirely. Of course, the opening 146 may be formed by partially cutting the folded part 144a along the second side. Alternatively, the opening 146 may be provided in the form of a hole penetrating the folded part 144a in the stacking direction (Y-axis direction).

Meanwhile, as described above, when the opening 146 is formed on the second side of the stacked portion 142, the separators 144 are separated from each other, and thus the relative position between the electrode 143 and the separator 144 may not be fixed. In other words, the structural stability of the stack 140 may be lowered by the opening 146.

To solve this, the electrode assembly 430 according to the fifth embodiment of the present disclosure may include a fixing member 450. The fixing member 450 may be a member for stably fixing the relative position between the electrode 143 and the separator 144 of the stack 440.

As an example, the fixing member 450 may be formed of a film or sheet-like tape having an adhesive material applied to one surface thereof, but the fixing member 450 is not particularly limited as long as it may fix the positions of the electrode 143 and the separator 144.

Referring to FIG. 8, in this embodiment, the fixing member 450 may include a first fixing portion 52, a second fixing portion 54, and a connection portion 56. At this time, the first fixing portion 52, the second fixing portion 54, and the connection portion 56 may be configured in the same manner as in the first embodiment. Through this, the structural stability of the stack 140 may be increased.

Meanwhile, in this embodiment, the connection portion 56 may cover at least a part or an area of the opening 146. This may be because the first fixing portion 52 and the second fixing portion 54 are disposed to be spaced apart in the vertical direction (Z-axis direction) with the opening 146 in between.

As such, if the connection portion 56 covers the opening 146, the flow of gas flowing through the opening 146 may be impeded. This may hinder the discharge of gas between the separators 144.

To solve this, a communication hole 457 may be formed in the connection portion 56 of the electrode assembly 430 according to the fifth embodiment of the present disclosure. The communication hole 457 may be a hole for allowing the opening 146 to communicate with the outside.

As shown in FIGS. 7 and 8, the communication hole 457 may be configured to penetrate the connection portion 56. Accordingly, the gas between the separators 144 may be smoothly discharged to the outside through the opening 146 and the communication hole 457, while the structural stability of the stack 140 may be ensured.

At this time, in this embodiment, the communication hole 457 may be configured in plurality. And, the plurality of communication holes 457 may be arranged in a direction parallel to the second side. This may be to allow gas to flow more smoothly through the opening 146.

As described above, the electrode assembly 430 according to the fifth embodiment of the present disclosure is provided with an opening 146 along the second side in the folded part 144a of the stacked portion 142, so that gas between the separators 144 may be smoothly discharged to the outside through the folded part 144a.

Additionally, in the electrode assembly 430 according to the fifth embodiment of the present disclosure, the fixing member 450 is attached to the stack 140 to fix the electrode 43 and the separator 44, thereby increasing the overall structural stability of this electrode assembly 430.

Furthermore, in the electrode assembly 430 according to the fifth embodiment of the present disclosure, a communication hole 457 is provided in the connection portion 56 of the fixing member 450, so that obstruction of gas discharge by the fixing member 450 may be minimized.

Hereinafter, an electrode assembly according to the sixth embodiment of the present disclosure will be described with different drawings.

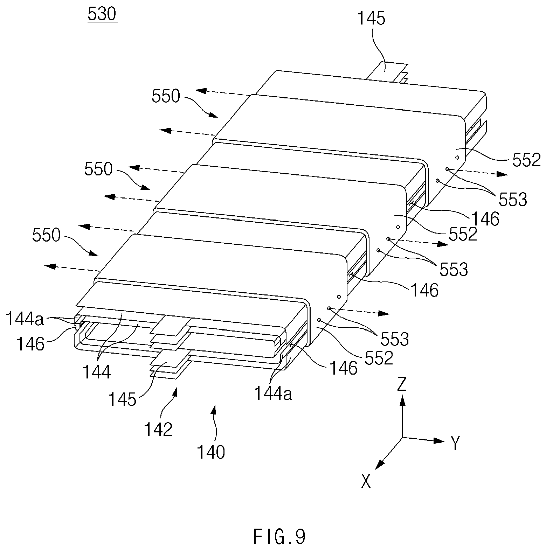

FIG. 9 is a perspective view of an electrode assembly according to the sixth embodiment of the present disclosure as viewed from above.

FIG. 9 discloses an electrode assembly 530 according to the sixth embodiment of the present disclosure. Referring to FIG. 9, the stack 140 of the electrode assembly 530 according to the sixth embodiment of the present disclosure may be configured in the same manner as the fifth embodiment described above. That is, in this embodiment, the stack 140 may be manufactured by a folding method, and an opening 146 may be formed in the folded part 144a.

At this time, in the electrode assembly 530 according to the sixth embodiment of the present disclosure, the fixing member 550 may have a ring or band shape surrounding the perimeter of the stacked portion 142. At this time, the perimeter of the stacked portion 142 may be a part surrounding the upper surface and the lower surface of the stacked portion 142 and the folded part 144a.

As such, in this embodiment, the fixing member 550 is configured to surround the stacked portion 142 entirely, so that the fixing force and supporting force by the fixing member 550 may be more strongly applied to the stack 140.

Meanwhile, in this embodiment, when viewed in a direction parallel to the second side (X-axis direction), the length of the fixing member 550 may be shorter than the length of the second side of the stacked portion 142. This may be to minimize the part of the opening 146 covered by the fixing member 550.

At this time, in this embodiment, the fixing member 550 may be configured in plurality to supplement the fixing force and supporting force. And, the plurality of fixing members 550 may be arranged in a direction parallel to the second side (X-axis direction).

Accordingly, the force for supporting or fixing the stack 140 may be strongly applied by multiple fixing members 550. Additionally, since the opening 146 positioned between the fixing members 550 is not blocked by the fixing members 550, gas may be discharged smoothly through the opening 146.

Hereinafter, the fixing member 550 positioned at the frontmost (positive direction of the X-axis) among the plurality of fixing members 550 is referred to as a first fixing member, and the fixing member 550 positioned at the rearmost (negative direction of the X-axis) is referred to as a second fixing member.

At this time, in this embodiment, the first fixing member and the second fixing member may be positioned adjacent to each of both ends of the stacked portion 142 in a direction parallel to the second side (X-axis direction). This may be to allow the supporting force and fixing force of the fixing member 550 to be applied more effectively to the stack 140.

Here, the fact that the fixing member 550 is positioned adjacent to the ends of the stacked portion 142 may mean that the fixing member 550 is positioned closer to the ends than the central part of the stacked portion 142.

Meanwhile, in this embodiment, a communication hole 553 may be formed in the part 552 covering the opening 146 in the fixing member 550. At this time, the communication hole 553 may be configured in the same manner as the communication hole 457 (shown in FIG. 7) described in the fifth embodiment. Through this, the obstruction of the gas flow by the fixing member 550 may be minimized.

Hereinafter, a secondary battery according to an embodiment of the present disclosure will be described with different drawings.

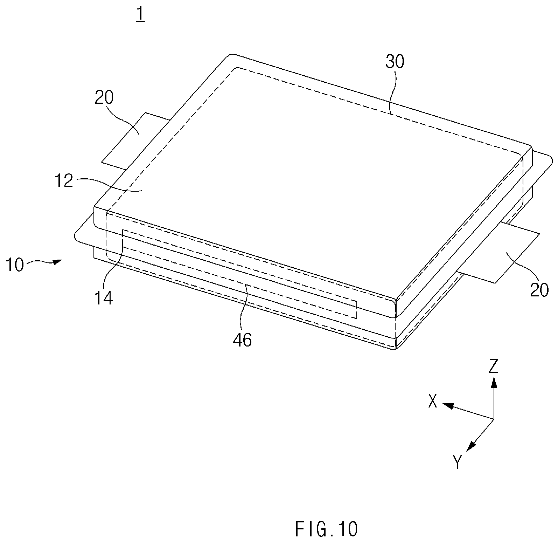

FIG. 10 is perspective view of a secondary battery according to an embodiment of the present disclosure as viewed from above. At this time, the electrode assembly accommodated inside the pouch is indicated by a dotted line.

FIG. 10 discloses a secondary battery 1 according to an embodiment of the present disclosure. Referring to FIG. 10, the secondary battery 1 according to an embodiment of the present disclosure may be a battery capable of charging or discharging electric energy multiple times.

To this end, the secondary battery 1 according to an embodiment of the present disclosure may include the electrode assemblies 30, 130, 230, 330, 430, 530 (hereinafter referred to as 30 to 530) (shown in FIGS. 1 to 9) described above. Hereinafter, the secondary battery 1 according to an embodiment of the present disclosure will be described on the premise that it includes the electrode assembly 30 according to the first embodiment of the present disclosure.

Meanwhile, the secondary battery 1 according to an embodiment of the present disclosure may include a pouch 10. In this embodiment, the pouch 10 may be a casing for accommodating the electrode assembly 30 described above and protecting it from the outside.

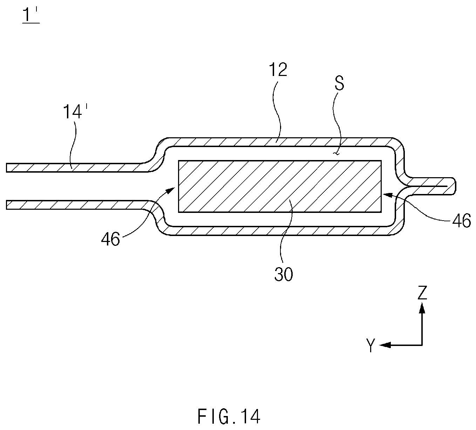

In this embodiment, the pouch 10 may include a receiving portion 12. The receiving portion 12 may be a part of the pouch 10 for providing a receiving space S (shown in FIG. 14) in which the electrode assembly 30 is accommodated.

In this embodiment, the pouch 10 may include a terrace portion 14. The terrace portion 14 may be a part of the pouch 10 formed along the perimeter of the receiving portion 12. The terrace portion 14 may be configured to isolate the receiving space of the receiving portion 12 from the outside.

In this embodiment, the pouch 10 may be formed by folding a single pouch sheet in half with the electrode assembly 30 in between. At this time, one surface and the other surface of the pouch sheet may be in contact with each other along the perimeter of the electrode assembly 30. In this way, the surfaces of the pouch sheet that are brought into contact with each other by folding in half may be sealed, thereby forming a terrace portion 14. For example, the surfaces may be thermally fused.

Meanwhile, in this embodiment, the secondary battery 1 may include an electrode lead 20. The electrode lead 20 may be a lead for electrically connecting the electrode assembly 30 to a load or power source outside the pouch 10.

To this end, the electrode lead 20 may have one side connected to the electrode assembly 30 and the other side extending outward from the pouch 10. The electrode lead 20 may be provided in the form of a conductive film or sheet as shown, but is not limited thereto, and may also be composed of a wire, a metal piece, or the like.

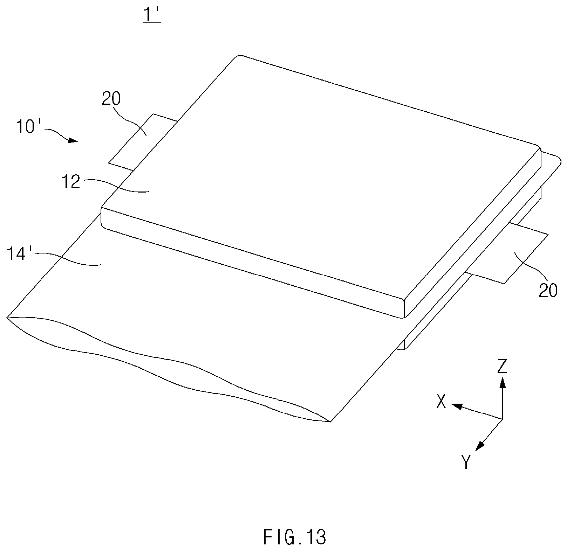

At this time, according to the secondary battery 1 according to an embodiment of the present disclosure, the electrode assembly 30 may be disposed so that the opening 46 faces a part of the terrace portion 14 of the pouch 10. At this time, the one part of the terrace portion 14 may be a part formed by sealing a gas capture unit 14' (shown in FIG. 13).

In this embodiment, the gas capture unit 14' may be a part provided with an opening to allow the gas in the receiving space of the receiving portion 12 to be discharged to the outside among the terrace portion 14 formed by folding a single pouch sheet in half.

As such, in this embodiment, the opening 46 of the electrode assembly 30 is disposed toward the opening, so that the gas between the separators may be discharged more smoothly to the outside of the pouch 10 through the opening 46. This will be described in detail later together with a manufacturing method of a secondary battery according to an embodiment of the present disclosure.

Hereinafter, a manufacturing method of a secondary battery according to an embodiment of the present disclosure will be described with different drawings.

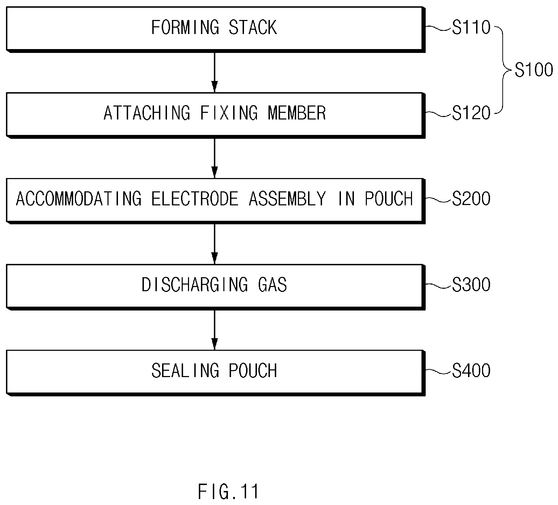

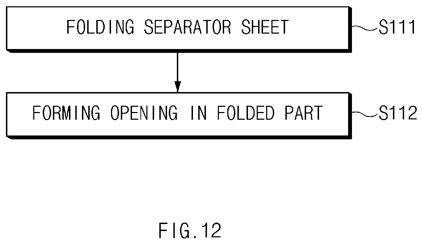

FIG. 11 is a flow chart of a manufacturing method of a secondary battery according to an embodiment of the present disclosure. FIG. 12 is a flow chart that subdivides step S110 of FIG. 11. FIGS. 13 and 14 are views for describing steps S200 and S300 according to an embodiment of the present disclosure.

Referring to FIGS. 1 to 11, in a manufacturing method of a secondary battery according to an embodiment of the present disclosure, electrode assemblies 30 to 530 are first manufactured (S100). At this time, in step S100 of the manufacturing method of a secondary battery according to an embodiment of the present disclosure, stacks 40, 140 are formed (S110), and fixing members 50, 150, 250, 350, 450, 550 are attached to the stacks 40, 140 (S120).

The stacks 40, 140 formed in step S110 of the manufacturing method of a secondary battery according to an embodiment of the present disclosure may include stacked portions 42, 142 having electrodes 43, 143 and separators 44, 144 alternately interposed and having a first side and a second side perpendicular to the first side; electrode tabs 45, 145 connected to the electrodes 43, 143 and protruding outward from the first side; and openings 46, 146 provided on the second side of the stacked portions 42, 142 to allow gas between the separators 44, 144 to flow to the outside.

Meanwhile, in step S110, the stack 40 may be formed by a stack process in which the electrode 43 and the separator 44 are alternately stacked. Alternatively, the stack 140 may be formed by a folding process in which the separator sheet is folded and a cutting process in which the opening 146 is formed. Hereinafter, the latter will be described in more detail.

Referring to FIGS. 7 to 12, in step S110 of the manufacturing method of a secondary battery according to an embodiment of the present disclosure, the separator sheet is folded along a direction parallel to the second side so that the electrode and the separator are alternately interposed (S111). At this time, in step S111, the folding process may be performed repeatedly for each unit length. Here, the unit length may correspond to or be longer than the width of the electrode 143.

As such, when the separator sheet is folded multiple times, a folded part 144a may be formed on the second side of the stacked portion 142 as several parts of the separator sheet overlap each other in a lateral direction (Y-axis direction) of the electrode 143 in the stacked portion 142.

At this time, it may be difficult for the gas between the separators 144 to flow into the folded part 144a. This is because several parts of the separator sheet overlap in the folded part 144a.

Next, in step S110 of the manufacturing method of a secondary battery according to an embodiment of the present disclosure, the separator sheet is folded (S111), and an opening 146 is formed in the folded part 144a (S112).

At this time, in step S112, the folded part 144a may be penetrated in the overlapping direction. This may be to allow the gas between the separators 144 positioned at the innermost side in the overlapping direction to flow directly to the outside.

At this time, in step S112, the folded part 144a may be cut from one end to the other end in a direction parallel to the second side (X-axis direction). Through this, the gas between the separators 144 may flow outward through the entire section along the second side of the stacked portion 142.

Of course, step S112 may also be performed by cutting the folded part 144a only in one section along a direction parallel to the second side (X-axis direction), or by forming a hole penetrating it.

Referring to FIGS. 1 to 14, in the manufacturing method of a secondary battery according to an embodiment of the present disclosure, electrode assemblies 30 to 530 are manufactured (S100), and the manufactured electrode assemblies 30 to 530 are accommodated in a receiving portion 12 of a pouch 10' (S200). In this embodiment, a receiving space S may be provided inside the receiving portion 12, and the electrode assemblies 30 to 530 may be disposed in the receiving space S of the receiving portion 12.

At this time, in step S200 of the manufacturing method of a secondary battery according to an embodiment of the present disclosure, the openings 46, 146 of the electrode assemblies 30 to 530 may be disposed to face one side of the pouch 10'. At this time, one side of the pouch 10' may be a gas capture unit 14'. In other words, the electrode assemblies 30 to 530 may be disposed in the receiving space S so that the second side of the stacked portions 42, 142 face the opening provided in the gas capture unit 14'.

Hereinafter, the above-described gas capture unit 14' will be described in detail.

In this embodiment, the pouch 10' may be formed by folding a single pouch sheet in half with the electrode assemblies 30 to 530 in between. Accordingly, one surface and the other surface of the pouch 10' may face or contact each other along the perimeter of the electrode assemblies 30 to 530.

At this time, one part of the facing surfaces of the pouch 10' may be sealed. At this time, the sealing may be performed by a thermal fusion process, but is not limited thereto. And, the other part may not be sealed. This may be to allow the gas inside the receiving space S to be discharged to the outside through the other part.

Here, the gas capture unit 14' may mean an unsealed part among the facing surfaces of the pouch 10'. Since the facing surfaces forming the gas capture unit 14' are not sealed to each other, an opening for connecting the receiving space S to the outside may be formed in the gas capture unit 14'.

Next, in the manufacturing method of a secondary battery according to an embodiment of the present disclosure, the electrode assemblies 30 to 530 are accommodated in the pouch 10' (S200), and the gas in the receiving space S is discharged (S300).

At this time, in step S300 according to an embodiment of the present disclosure, a predetermined electrolyte may first be injected into the receiving space S through an opening provided at the end of the gas capture unit 14'.

Next, in step S300, the opening provided at the end of the gas capture unit 14' is sealed, and a process of charging and discharging the electrode assemblies 30 to 530 is performed. Accordingly, a predetermined gas may be generated between the separators of the electrode assemblies 30 to 530. At this time, the sealing may be performed by a thermal fusion process, but is not limited thereto.

Next, in step S300, a predetermined hole is formed in one area of the gas capture unit 14' to discharge the gas in the receiving space S to the outside. At this time, in this embodiment, the openings 46, 146 of the electrode assemblies 30 to 530 are disposed toward the gas capture unit 14', so that the gas inside the electrode assemblies 30 to 530 may be smoothly discharged to the outside of the pouch 10' through the openings 46, 146.

That is, according to the manufacturing method of a secondary battery according to this embodiment, the gas in the receiving space S and the electrode assemblies 30 to 530 may be discharged more effectively to the outside of the pouch 10'.

Next, in the manufacturing method of a secondary battery according to an embodiment of the present disclosure, the gas in the receiving space S is discharged (S300), and the area adjacent to the electrode assemblies 30 to 530 in the gas capture unit 14' is sealed (S400). At this time, the sealing may be performed by a thermal fusion process, but is not limited thereto.

At this time, the area adjacent to the electrode assemblies 30 to 530 in the gas capture unit 14' may be an area provided along a direction (X-axis direction) parallel to the second side of the electrode assemblies 30 to 530. Accordingly, the receiving space S may be isolated from a part in which a hole for discharging gas is formed in the gas capture unit 14'.

Meanwhile, the gas capture unit 14' may be removed by cutting an outer portion. Accordingly, the pouch 10' shown in FIGS. 13 and 14 may have a more compact shape like the pouch 10 shown in FIG. 10.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Secondary battery
10, 10': Pouch
20: Electrode lead
30, 130, 230, 330, 430, 530: Electrode assembly
40, 140: Stack
50, 150, 250, 350, 450, 550: Fixing member
S: Receiving space

## Claims

1. An electrode assembly comprising:
a stacked portion having electrodes and separators alternately interposed, and having a first side and a second side perpendicular to the first side;
an electrode tab connected to the electrode and protruding outward from the first side of the stacked portion through each section between the separators;
an opening provided on the second side of the stacked portion to allow gas between the separators to flow to the outside; and
a fixing member that fixes the electrode and the separator and covers at least a portion of the opening.

2. The electrode assembly according to claim 1,
wherein the fixing member comprises:
a first fixing portion attached to one surface of the stacked portion;
a second fixing portion attached to the other surface of the stacked portion; and
a connection portion connecting the first fixing portion and the second fixing portion, and covering at least a portion of the opening.

3. The electrode assembly according to claim 2,
wherein the opening extends in the longitudinal direction of the stacked portion, and
the fixing member is provided along the longitudinal direction of the stacked portion.

4. The electrode assembly according to claim 2,
wherein the connection portion is made of a porous material to allow gas between the separators to pass through.

5. The electrode assembly according to claim 2,
wherein in the connection portion, a communication hole communicating with the opening is formed.

6. The electrode assembly according to claim 5,
wherein the communication hole is provided in plurality.

7. The electrode assembly according to claim 1,
wherein the fixing member has a ring shape surrounding a perimeter of the stacked portion.

8. The electrode assembly according to claim 1,
wherein the fixing member is configured in plurality and disposed along a direction parallel to the second side of the stacked portion.

9. The electrode assembly according to claim 8,
wherein the plurality of fixing members comprise:
a first fixing member and a second fixing member adjacent to each of both ends in a direction parallel to the second side of the stacked portion.

10. The electrode assembly according to claim 1,
wherein the opening is formed by cutting the separator from one end to the other end in a direction parallel to the second side.

11. The electrode assembly according to claim 1,
wherein the openings are provided on both opposite sides of the stacked portion, respectively.

12. The electrode assembly according to claim 1,
wherein the fixing member is made of a tape.

13. A secondary battery comprising:
a pouch having a receiving space therein; and
an electrode assembly disposed in the receiving space,
wherein the electrode assembly comprises:
a stacked portion having electrodes and separators alternately interposed, and having a first side and a second side perpendicular to the first side;
an electrode tab connected to the electrode and protruding outward from the first side of the stacked portion through each section between the separators;
an opening provided on the second side of the stacked portion to allow gas between the separators to flow to the outside; and
a fixing member that fixes the electrode and the separator and covers at least a portion of the opening.

14. A manufacturing method of a secondary battery, comprising:
a step of manufacturing an electrode assembly;
a step of accommodating the electrode assembly in a receiving space of a pouch;
a step of discharging gas in the receiving space to one side of the pouch; and
a step of sealing the pouch,
wherein the step of manufacturing the electrode assembly comprises:
a step of forming a stack comprising a stacked portion having electrodes and separators alternately interposed and having a first side and a second side perpendicular to the first side, an electrode tab connected to the electrode and protruding outward from the first side of the stacked portion, and an opening provided on the second side of the stacked portion to allow gas between the separators to flow to the outside; and
a step of attaching a fixing member covering at least a portion of the opening to the stack in order to fix the electrode and the separator.

15. The manufacturing method of a secondary battery according to claim 14,
wherein in the step of accommodating the electrode assembly in the receiving space, the opening of the electrode assembly is disposed to face the one side of the pouch.

16. The manufacturing method of a secondary battery according to claim 14,
wherein the step of forming the stack comprises:
a step of folding a separator sheet along a direction parallel to the second side so that electrodes and separators are alternately interposed; and
a step of forming the opening in the folded part of the separator sheet along the second side.

17. The manufacturing method of a secondary battery according to claim 16,
wherein in the step of folding the separator sheet, several parts of the separator sheet overlap each other in a lateral direction of the electrode to form the folded part, and
in the step of forming the opening, the folded part is penetrated in the overlapping direction.

18. The manufacturing method of a secondary battery according to claim 16,
wherein in the step of forming the opening, the folded part of the separator sheet is cut or a communication hole is formed in the folded part of the separator sheet.

19. The manufacturing method of a secondary battery according to claim 18,
wherein in the step of forming the opening, the folded part of the separator sheet is cut from one end to the other end in a direction parallel to the second side.
